(19) Europäisches Patentamt
European Patent Office
Office européen des brevets

(11) **EP 4 644 020 A1**

(12) **EUROPEAN PATENT APPLICATION**

(43) Date of publication:
**05.11.2025 Bulletin 2025/45**

(21) Application number: **25171883.9**

(22) Date of filing: **23.04.2025**

(51) International Patent Classification (IPC):
*B22F 10/28* (2021.01)   *B33Y 10/00* (2015.01)
*B33Y 70/00* (2020.01)   *C22C 33/02* (2006.01)
*C22C 38/00* (2006.01)   *C22C 38/02* (2006.01)
*C22C 38/04* (2006.01)   *C22C 38/08* (2006.01)
*C22C 38/12* (2006.01)   *C22C 38/18* (2006.01)

(52) Cooperative Patent Classification (CPC):
**B22F 10/28; B33Y 10/00; B33Y 70/00;
C22C 33/0264; C22C 33/0285; C22C 38/001;
C22C 38/02; C22C 38/04; C22C 38/08;
C22C 38/12; C22C 38/18;** B22F 12/17; B33Y 30/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.04.2024   JP 2024069645
30.01.2025   JP 2025013892**

(71) Applicant: **Daido Steel Co., Ltd.**
**Nagoya-shi**
**Aichi 461-8581 (JP)**

(72) Inventor: **KUMAGAI, Yoshiki**
**Nagoya-shi, Aichi, 457-8545 (JP)**

(74) Representative: **Diehl & Partner**
**Patent- und Rechtsanwaltskanzlei mbB**
**Erika-Mann-Straße 9**
**80636 München (DE)**

(54) **METHOD FOR PRODUCING HIGH-STRENGTH AND HIGH-THERMAL-CONDUCTIVITY ADDITIVELY-MANUFACTURED BODY OF IRON-BASED ALLOY**

(57)    The present invention relates to a method for producing a high-strength and high-thermal-conductivity additively-manufactured body of an iron-based alloy with a laser-powder bed fusion, the method including: using an iron-based alloy powder having a Ms point of higher than 220°C, a C content of 0.40 mass% or less, a Cr content of 7 mass% or less, and a Fe content of 90 mass% or more; and performing manufacturing at a laser power P (W), a scanning speed v (mm/s), and a laser spot diameter $\sigma$ (mm) at which an energy density per area EA is 3 J/mm² or more when the energy density per area EA is defined as EA = P/(v·$\sigma$).

## FIG. 1

(a)                    (b)

80      15

25,35      90°      10      2.5

BUILDING DIRECTION

CUTOUT PORTION

EP 4 644 020 A1

**Description**

TECHNICAL FIELD

The present invention relates to a method for producing a high-strength and high-thermal-conductivity additively-manufactured body of an iron-based alloy.

BACKGROUND ART

In the related art, an additive manufacturing method has been proposed.

For example, Patent Literature 1 describes an additive manufacturing method containing a material layer-forming step of forming a material layer in a manufacturing region that is a region where a desired three-dimensionally manufactured product is formed, and a solidifying step of forming a solidified layer by performing scanning with a laser beam or an electron beam in a predetermined scanning direction and irradiating a predetermined irradiation region of the material layer with the laser beam or the electron beam, in which the material layer-forming step and the solidifying step are repeated for each divided layer defined by dividing the three-dimensionally manufactured product in a predetermined thickness, thereby laminating a plurality of solidified layers to obtain the three-dimensionally manufactured product. In this technique, a stress control layer, which is one or more solidified layers among the plurality of solidified layers, includes a compressive stress-applied portion which is a region to which compressive stress is applied, and a non-compressive stress-applied portion which is a region different from the compressive stress-applied portion. In the solidifying step, the compressive stress-applied portion is scanned with the laser beam or the electron beam in the scanning direction different from that of the non-compressive stress-applied portion so that the compressive stress-applied portion expands more than the non-compressive stress-applied portion or the non-compressive stress-applied portion contracts more than the compressive stress-applied portion based on a relationship between the scanning direction and the amount of expansion or contraction during a temperature change or heat treatment.

CITATION LIST

PATENT LITERATURE

Patent Literature 1: JP7096405B

SUMMARY OF INVENTION

The present invention provides a method for producing a high-strength and high-thermal-conductivity additively-manufactured body of an iron-based alloy, by which an additively-manufactured product that is less likely to crack due to a small residual stress can be obtained.

The present invention has the following (1) to (6) configurations.

(1) A method for producing a high-strength and high-thermal-conductivity additively-manufactured body of an iron-based alloy with a laser-powder bed fusion, the method including:

using an iron-based alloy powder having a Ms point of higher than 220°C, a C content of 0.40 mass% or less, a Cr content of 7 mass% or less, and a Fe content of 90 mass% or more; and
performing manufacturing at a laser power P (W), a scanning speed v (mm/s), and a laser spot diameter $\sigma$ (mm) at which an energy density per area EA is 3 J/mm$^2$ or more when the energy density per area EA is defined as EA = P/(v·$\sigma$).

(2) The method for producing a high-strength and high-thermal-conductivity additively-manufactured body of an iron-based alloy according to (1), in which the iron-based alloy powder further contains at least one element selected from the group consisting of Si, Mn, Ni, and V in the following respective content, or further satisfies the following Expression (1) where "Mo" and "W" in Expression (1) mean a Mo content and a W content, respectively:

a Si content of 0.5 mass% or less,
a Mn content of 1.0 mass% or less,
a Ni content of 3 mass% or less,
a V content of 0.7 mass% or less, and

$$Mo + 0.5W \leq 4.0 \text{ mass\%} \qquad \text{Expression (1).}$$

(3) The method for producing a high-strength and high-thermal-conductivity additively-manufactured body of an iron-based alloy according to (1) or (2), in which the manufacturing is performed at a laser power P (W), a scanning speed v (mm/s), and a laser spot diameter $\sigma$ (mm) at which the energy density per area EA is 3 J/mm$^2$ to 6 J/mm$^2$.

(4) The method for producing a high-strength and high-thermal-conductivity additively-manufactured body of an iron-based alloy according to any one of (1) to (3), in which the manufacturing is performed at a laser power P (W), a scanning speed v (mm/s), a hatching distance w (mm), and a layer thickness t (mm) at which an energy density per volume EV is 70 J/mm$^3$ or more when the energy density per volume EV is defined as EV = P/(v·w·t).

(5) The method for producing a high-strength and high-thermal conductivity additively-manufactured body of an iron-based alloy according to (4), in which the manufacturing is performed at a laser power P (W), a scanning speed v (mm/s), a hatching distance w (mm), and a layer thickness t (mm) at which the energy density per volume EV is 90 J/mm$^3$ to 150 J/mm$^3$.

(6) The method for producing a high-strength and high-thermal conductivity additively-manufactured body of an iron-based alloy according to any one of (1) to (5), in which the manufacturing is performed in an Ar atmosphere.

The present invention can provide a method for producing a high-strength and high-thermal-conductivity additively-manufactured body of an iron-based alloy, by which an additively-manufactured product that is less likely to crack due to a small residual stress can be obtained.

BRIEF DESCRIPTION OF DRAWINGS

FIG. 1 is a schematic diagram illustrating an appearance of an additively-manufactured body obtained in each of Examples and Comparative Examples.

FIG. 2 is a photograph of a metal structure of an additively-manufactured body obtained in Example 7.

DESCRIPTION OF EMBODIMENTS

The present invention will be described.

The present invention provides a method for producing a high-strength and high-thermal-conductivity additively-manufactured body of an iron-based alloy with a laser-powder bed fusion. The method includes: using an iron-based alloy powder having a Ms point of higher than 220°C, a C content of 0.40 mass% or less, a Cr content of 7 mass% or less, and a Fe content of 90 mass% or more; and performing manufacturing at a laser power P (W), a scanning speed v (mm/s), and a laser spot diameter $\sigma$ (mm) at which an energy density per area EA is 3 J/mm$^2$ or more when the energy density per area EA is defined as EA = P/(v·$\sigma$).

Such a method for producing a high-strength and high-thermal-conductivity additively-manufactured body of an iron-based alloy is also referred to as a "production method of the present invention" hereinafter.

The iron-based alloy powder that is used in the production method of the present invention, which has a Ms point of higher than 220°C, a C content of 0.40 mass% or less, a Cr content of 7 mass% or less, and a Fe content of 90 mass% or more, is hereinafter also referred to as an "alloy powder of the present invention".

First, the alloy powder of the present invention will be described.

<Ms Point>

The Ms point of the alloy powder of the present invention is higher than 220°C.

The higher the Ms point of the alloy powder used as the material is, the more likely the manufactured product undergoes martensitic transformation in the additive manufacturing process. On the other hand, in the case where the Ms point is low, the amount of retained austenite in the manufactured product increases, and the thermal conductivity decreases. A preheating temperature in a general additive manufacturing apparatus is 200°C at maximum, and therefore, the Ms point needs to be higher than 220°C, which is higher than the preheating temperature, in order to promote martensitic transformation during additive manufacturing. Preferably, the Ms point may be 250°C or higher. However, since retained austenite also contributes to prevention of cracking, the Ms point may be preferably 370°C or lower, and more preferably 330°C or lower.

The Ms point is a value calculated by using the following regression equation.

Ms (°C) = 550 - 361 × (%C) - 39 × (%Mn) - 35 × (%V) - 17 × (%Ni) - 20 × (%Cr) - 10 × (%Cu) - 5 × (%Mo + %W) + 15 × (%Co) + 30 × (%Al)

Here, in the equation, (%C), (%Mn), (%V), (%Ni), (%Cr), (%Cu), (%Mo + %W), (%Co), and (%Al) mean the content in mass% of each composition of C, Mn, V, Ni, Cr, Cu, (Mo + W), Co, and Al in the alloy powder of the present invention.

<C: 0.40 mass% or less>

C is an element effective for increasing the hardness of the martensite structure and for increasing the strength of a base material by bond to Cr, V, Mo, and the like to form carbides by tempering heat treatment. However, in the case where a large amount of C is contained in the alloy powder, the hardness of the martensite structure in the additively-manufactured body becomes too large, and the risk of cracking increases. Therefore, the amount of C contained in the alloy powder needs to be 0.40 mass% or less. In consideration of the strength of the additively-manufactured body, the content of C is preferably 0.10 mass% or more.

<Cr: 7 mass% or less>

Cr is effective for increasing the strength of the base material by bonding to C to form a carbide and for further improving the corrosion resistance, and therefore, Cr may be contained in the alloy powder of the present invention. However, in the case where a large amount of Cr is contained, carbides are excessively generated during additive manufacturing, the hardness increases, and cracking is caused. Therefore, the content of Cr needs to be 7 mass% or less.
The content of Cr in the alloy powder of the present invention may be 1.0 mass% or more, and preferably 3.0 mass% or more.

<Fe: 90 mass% or more>

In the case where the alloy powder of the present invention contains Fe in an amount of 90 mass% or more, the thermal conductivity of the additively-manufactured body obtained by the production method of the present invention is increased.
The content of Fe in the alloy powder of the present invention is preferably 91 mass% or more.
As described above, the alloy powder of the present invention has a Ms point of higher than 220°C, a C content of 0.40 mass% or less, a Cr content of 7 mass% or less, and a Fe content of 90 mass% or more. The alloy powder of the present invention may further contain the following compositions.

<Si: 0.5 mass% or less>

Si is an element that acts as a deoxidizing agent, and a small amount of Si may be contained in the alloy powder of the present invention in order to improve machinability. However, in the case where a large amount of Si is contained, the thermal conductivity is lowered, and the toughness deteriorates to cause cracking. Therefore, the content of Si is preferably 0.5 mass% or less.
The content of Si in the alloy powder of the present invention may be 0.02 mass% or more, and preferably 0.05 mass% or more.

<V: 0.7 mass% or less>

V is effective in increasing the strength of the base material by bonding to C to form a carbide, and therefore, V may be contained in the alloy powder of the present invention. However, in the case where a large amount of V is contained, carbides are excessively generated during additive manufacturing, the hardness increases, and cracking is caused. Therefore, the content of V is preferably 0.7 mass% or less.
The content of V in the alloy powder of the present invention may be 0.1 mass% or more, and preferably 0.2 mass% or more.

<Mn: 1.0 mass% or less>

Mn is an element that increases the hardenability, and may be contained in the alloy powder of the present invention. However, in the case where a large amount of Mn is contained, the amount of metal vapor (fume) generated when the alloy powder of the present invention is irradiated with a laser beam increases, and defective manufacturing is caused. Therefore, the content of Mn in the alloy powder of the present invention is preferably 1.0 mass% or less.

The content of Mn in the alloy powder of the present invention may be 0.1 mass% or more, and preferably 0.3 mass% or more.

<Cu: 1 mass% or less>

Cu is effective for controlling the Ms point, and therefore, Cu may be contained in the alloy powder of the present invention. However, in the case where a large amount of Cu is contained, solidification cracking is caused. Therefore, the content of Cu in the alloy powder of the present invention is preferably 1 mass% or less.

The content of Cu in the alloy powder of the present invention may be 0.001 mass% or more, and preferably 0.005 mass% or more.

<Ni: 3 mass% or less>

Ni may be contained in the alloy powder of the present invention in order to improve toughness. However, in the case where the content of Ni is large, the Ms point is excessively lowered, and the thermal conductivity is lowered. Therefore, the content of Ni in the alloy powder of the present invention is preferably 3 mass% or less.

The content of Ni in the alloy powder of the present invention may be 0.001 mass% or more, and preferably 0.005 mass% or more.

<Nb, Ta, Ti, and Hf: each 1 mass% or less>

Any element of Nb, Ta, Ti, and Hf has an effect of increasing the strength of the base material by bonding to C to form a carbide, or increasing the hardenability, and therefore, any element of Nb, Ta, Ti, and Hf may be contained in the alloy powder of the present invention. However, in the case where a large amount of any element of Nb, Ta, Ti, and Hf is contained, coarse carbides are formed, and cracking is caused. Therefore, the content of each of Nb, Ta, Ti, and Hf in the alloy powder of the present invention is preferably 1 mass% or less.

The content of each of Nb, Ta, Ti, and Hf in the alloy powder of the present invention may be 0.001 mass% or more, and preferably 0.005 mass% or more.

<Relational Expression of Mo + 0.5W: 4.0 mass% or less>

Any element of Mo and W has an effect of increasing the strength of the base material by bonding to C to form a carbide, or increasing the hardenability, and therefore, any element of Mo and W may be contained in the alloy powder of the present invention. However, in the case where a large amount of any element of Mo and W is contained, coarse carbides are formed, and cracking is caused. Since the atomic weight of W is about twice that of Mo, the content of each of Mo and W in the alloy powder of the present invention is preferably 4.0 mass% or less and more preferably less than 2.0 mass% in the relational expression of Mo + 0.5W. Note that only one of Mo and W may be contained.

The content of each of Mo and W in the alloy powder of the present invention may be 0.5 mass% or more, and preferably 0.8 mass% or more, in the relational expression of Mo + 0.5W.

<Al: 1 mass% or less>

Al is an element that increases the Ms point, and may be contained in the alloy powder of the present invention in order to control the Ms point. However, in the case where a large amount of Al is contained, Al reacts with O or N as an impurity to form an oxide or a nitride, and cracking is caused. Therefore, the content of Al in the alloy powder of the present invention is preferably 1 mass% or less.

The content of Al in the alloy powder of the present invention may be 0.001 mass% or more, and preferably 0.005 mass% or more.

<Co: 3 mass% or less>

Co is an element that increases the Ms point, and may be contained in the alloy powder of the present invention in order to control the Ms point. However, in the case where a large amount of Co is contained, the thermal conductivity decreases. Therefore, the content of Co in the alloy powder of the present invention is preferably 3 mass% or less.

The content of Co in the alloy powder of the present invention may be 0.001 mass% or more, and preferably 0.005 mass% or more.

<Other impurities>

The alloy powder of the present invention may contain the following compositions in the following amounts.

In the present invention, these compositions are treated as inevitable impurities.

$P \leq 0.05$ mass%, $S \leq 0.05$ mass%, $O \leq 0.05$ mass%, $N \leq 0.05$ mass%, $H \leq 0.05$ mass%, $B \leq 0.01$ mass%, $Zr \leq 0.05$ mass%, $Ag \leq 0.03$ mass%, $As \leq 0.01$ mass%, $Ca \leq 0.005$ mass%, $Sb \leq 0.03$ mass%, $Se \leq 0.03$ mass%, $Sn \leq 0.03$ mass%, $Te \leq 0.005$ mass%, $Bi \leq 0.01$ mass%, $Pb \leq 0.03$ mass%, $Mg \leq 0.02$ mass%, $Hg \leq 0.01$ mass%, $Cd \leq 0.01$ mass%, and $REM \leq 0.01$ mass%.

The alloy powder of the present invention may be mixed with a powder having an increased concentration of carbon, nitrogen, or oxygen by surface treatment, a plurality of alloy powders having different compositions, a pure metal powder, a metalloid powder, an oxide powder, a nitride powder, a carbide powder, a boride powder, a silicide powder, an organic powder, a carbon powder, and the like, and the content of each composition in the mixed powder is preferably within the range of the present invention.

Other aspects of the alloy powder of the present invention may be the same as those of commonly known materials in the additive manufacturing method. For example, the average particle diameter D50 may be 20 $\mu$m to 50 $\mu$m.

In the production method of the present invention, an additively-manufactured body is produced by laser-powder bed fusion (L-PBF) using the alloy powder of the present invention as described above. For example, the alloy powder of the present invention as described above is placed in a manufacturing region to form a material layer, a predetermined position of the material layer is scanned and irradiated with a laser beam, to sinter or melt the material layer to form a solidified layer, and the formation of the material layer and the formation of the solidified layer are repeated to laminate the solidified layers, thereby producing a high-strength and high-thermal-conductivity additively-manufactured body of the iron-based alloy that is a desired three-dimensionally manufactured product.

In the production method of the present invention, a commonly known additive manufacturing apparatus used for laser-powder bed fusion (L-PBF) additive manufacturing can be used.

Examples of such an additive manufacturing apparatus include an apparatus including a chamber, a material layer forming device, and an irradiation device.

The chamber covers a manufacturing region that is a region where the desired three-dimensionally manufactured product is formed.

An inert gas of a predetermined concentration is supplied from an inert gas supply device to the chamber.

The inert gas is preferably a gas that does not substantially react with the material layer or the solidified layer, and $N_2$ gas, Ar gas, He gas, or the like may be used.

In the production method of the present invention, the manufacturing is preferably performed in an Ar atmosphere using Ar gas.

As a result of intensive studies, the present inventors have found that when additive manufacturing is performed in an Ar atmosphere, the residual stress in the high-strength and high-thermal-conductivity additively-manufactured body of the iron-based alloy obtained by the production method of the present invention is further reduced. This is considered to be because Ar gas has a lower thermal conductivity than $N_2$ gas, and thus the use of Ar gas reduces the cooling rate of the additively-manufactured product during additive manufacturing.

A window serving as a laser beam transmission window is provided on an upper surface of the chamber. The window is formed of a material by which a laser beam can be transmitted.

The material layer forming device is provided inside the chamber. The material layer forming device includes a base having a manufacturing region and a recoater head disposed on the base. The recoater head is configured to be reciprocally movable in a horizontal axis direction by a recoater head-driving device.

The recoater head includes a material accommodation unit, a material supply port, and a material discharge port.

The material supply port is provided in an upper portion of the material accommodation unit and serves as a reception port for the alloy powder of the present invention supplied from a material supply unit to the material accommodation unit. The material discharge port is provided on a bottom surface of the material accommodation unit and discharges the alloy powder of the present invention in the material accommodation unit. The material discharge port preferably has a slit shape extending in a longitudinal direction of the material accommodation unit. Blades are provided on both side surfaces of the recoater head. The blade flattens the alloy powder of the present invention discharged from the material discharge port to form a material layer.

The manufacturing region is located on a manufacturing table, and a desired three-dimensionally manufactured product is formed in the manufacturing region. The manufacturing table is driven by a manufacturing table-driving device and is configured to be movable in a vertical direction. During the manufacturing, it is preferable that a base plate is disposed on the manufacturing table and a first material layer is formed on the base plate.

In the production method of the present invention, the base plate is preferably preheated. Specifically, the base plate is preferably preheated to 120°C to 200°C, and more preferably preheated to about 200°C. In the case where the base plate is preheated, the degree or frequency of cracks tend to be reduced in the high-strength and high-thermal

conductivity additively-manufactured body of the iron-based alloy obtained by the production method of the present invention.

The irradiation device is provided above the chamber. The irradiation device irradiates an irradiation region of the material layer formed in the manufacturing region with a laser beam according to preset irradiation conditions to melt or sinter and solidify the alloy powder of the present invention present at the irradiation position.

The irradiation conditions include an intensity of the laser beam, a size of a spot diameter, a scanning speed, a thickness of a divided layer, and the like.

The irradiation region is present in the manufacturing region and substantially coincides with a region surrounded by a contour shape of the three-dimensionally manufactured product in the predetermined divided layer. The irradiation device includes a light source, a collimator, a focus control unit, and a scanning device.

The light source generates a laser beam. The laser beam may be any laser beam capable of sintering or melting the alloy powder of the present invention, and may be, for example, a fiber laser, a $CO_2$ laser, or a YAG laser.

The collimator includes a collimator lens and converts a laser beam output from the light source into parallel light.

The focus control unit includes a focus control lens and a motor that moves the focus control lens back and forth along an optical axis direction. The focus control unit adjusts a beam diameter, that is, a spot diameter of the laser beam on a surface of the material layer by adjusting a focus position of the laser beam converted into the parallel light by the collimator.

The scanning device is, for example, a galvanometer scanner, and includes an X-axis galvanometer mirror, a Y-axis galvanometer mirror, an X-axis actuator that rotates the X-axis galvanometer mirror to a desired angle, and a Y-axis actuator that rotates the Y-axis galvanometer mirror to a desired angle. The laser beam having passed through the focus control unit is controlled by the X-axis galvanometer mirror and the Y-axis galvanometer mirror, whereby the upper surface of the material layer in the manufacturing region is two-dimensionally scanned with the laser beam. Here, the X-axis direction and the Y-axis direction are horizontal directions perpendicular to each other.

A control device of such an additive manufacturing apparatus controls the material layer forming device, the irradiation device, and the like according to a project file to perform additive manufacturing. The project file is created by, for example, a computer aided manufacturing (CAM) device and sent to the control device via a communication line or a storage medium. The control device and the CAM device are implemented by freely combining hardware such as a CPU, a RAM, a ROM, an auxiliary storage device, and an input/output interface, and software. The project file may include a command for a laser beam scanning pattern such as an island pattern or a stripe pattern.

In the production method of the present invention, for example, by using a commonly known additive manufacturing apparatus as described above, when an energy density per area EA is defined as $EA = P/(v \cdot \sigma)$, manufacturing is performed at a laser power P (W), a scanning speed v (mm/s), and a laser spot diameter $\sigma$ (mm) at which the energy density per area EA is 3 $J/mm^2$ or more.

In the additive manufacturing process of the iron-based alloy powder, martensitic transformation of the manufactured product occurs during the additive manufacturing. The present inventors have found that, when additive manufacturing is repeated under a condition in which the energy density per area is high, the martensite structure is tempered during manufacturing, the residual stress is relaxed, and an additively-manufactured product that is hardly cracked can be obtained. In addition, the present inventors have found that an energy density per area EA of 3 $J/mm^2$ or more is required for this purpose.

However, since an excessive increase in the energy density per area may promote the generation of defects inside the manufactured product and increase the surface roughness of the manufactured product to cause cracking, the energy density per area EA is preferably set to 7 $J/mm^2$ or less.

It is more preferable to perform manufacturing at a laser power P (W), a scanning speed v (mm/s), and a laser spot diameter $\sigma$ (mm) at which the energy density per area EA is 3 $J/mm^2$ to 6 $J/mm^2$.

In the production method of the present invention, when an energy density per volume EV is defined as $EV = P/(v \cdot w \cdot t)$, it is preferable to perform manufacturing at a laser power P (W), a scanning speed v (mm/s), a hatching distance w (mm), and a layer thickness t (mm) at which the energy density per volume EV is 70 $J/mm^3$ or more.

The energy density per volume EV contributes to the amount of defects in the manufactured product, and the amount of defects can increase when the energy density per volume EV is too small or too large.

When the energy density per volume EV is defined as $EV = P/(v \cdot w \cdot t)$, it is preferable to perform manufacturing at a laser power P (W), a scanning speed v (mm/s), a hatching distance w (mm)), and a layer thickness t (mm) at which the energy density per volume EV is 70 $J/mm^3$ to 150 $J/mm^3$, and more preferably 90 $J/mm^3$ to 150 $J/mm^3$.

In the production method of the present invention, the laser power P (W), the scanning speed v (mm/s), the laser spot diameter $\sigma$ (mm), the hatching distance w (mm), and the layer thickness t (mm) can be set as irradiation conditions of the irradiation device.

The laser power P (W) may be adjusted within a range in which the energy density per area $EA = P/(v \cdot \sigma)$ is 3 $J/mm^2$ or more. However, in the case where the laser power P is excessive, metal vapor (fume) and spatter are likely to be generated, and surface roughness and manufacturing defects are increased. Therefore, the laser power P is preferably set to 1000 W or less, and more preferably 500 W or less. On the other hand, in the case where the laser power P is too small, melting of the powder becomes difficult. Therefore, the laser power P is preferably set to 100 W or more, and more preferably 210 W or more.

The scanning speed v (mm/s) may be adjusted within a range in which the energy density per area $EA = P/(v\cdot\sigma)$ is 3 $J/mm^2$ or more. However, in the case where the scanning speed v is excessive, the melting of the powder becomes unstable, and the surface roughness is increased. Therefore, the scanning speed v is preferably set to 1000 mm/s or less, and more preferably 700 mm/s or less. On the other hand, in the case where the scanning speed v is too low, the manufacturing speed decreases, and productivity is impaired. Therefore, the scanning speed v is preferably set to 200 mm/s or more, and more preferably 300 mm/s or more.

The laser spot diameter $\sigma$ (mm) may be adjusted in a range in which the energy density per area $EA = P/(v\cdot\sigma)$ is 3 $J/mm^2$ or more. When the laser spot diameter $\sigma$ is too small or too large, the generation of spatter is promoted, and the manufacturing defects are increased. Therefore, the range of the laser spot diameter $\sigma$ is preferably 0.05 mm to 0.30 mm, and more preferably 0.10 mm to 0.26 mm.

The hatching distance w (mm) may be adjusted in a range in which the energy density per volume $EV = P/(v\cdot w\cdot t)$ is 70 $J/mm^3$ or more. However, in the case where the hatching distance w is too large, the manufacturing defects are increased. Therefore, the hatching distance w is preferably set to 0.40 mm or less, and more preferably 0.30 mm or less. On the other hand, in the case where the hatching distance w is too small, the manufacturing speed decreases, and the productivity is impaired. Therefore, the hatching distance w is preferably set to 0.05 mm or more, and more preferably 0.08 mm or more.

The layer thickness t (mm) may be adjusted in a range in which the energy density per volume $EV = P/(v\cdot w\cdot t)$ is 70 $J/mm^3$ or more. However, in the case where the layer thickness t is too large, surface roughness and manufacturing defects are increased. Therefore, the layer thickness t is preferably set to 0.100 mm or less, and more preferably 0.070 mm or less. On the other hand, in the case where the layer thickness t is too small, the manufacturing speed decreases, productivity is impaired, and it becomes difficult to uniformly form a material layer made of the alloy powder of the present invention. Therefore, the layer thickness t is preferably set to 0.030 mm or more, and more preferably 0.050 mm or more.

In addition, in order to reduce the surface roughness, an outer peripheral portion (contour) of the additively-manufactured body or a surface layer of a down skin portion may be manufactured by appropriately changing the irradiation conditions.

[Examples]

The present invention will be described with reference to Examples. The present invention is not limited to Examples described below.

In each of Examples and Comparative Examples, an iron-based alloy powder containing compositions shown in Table 1 was used, and additive manufacturing using laser-powder bed fusion was performed under manufacturing conditions shown in Table 2.

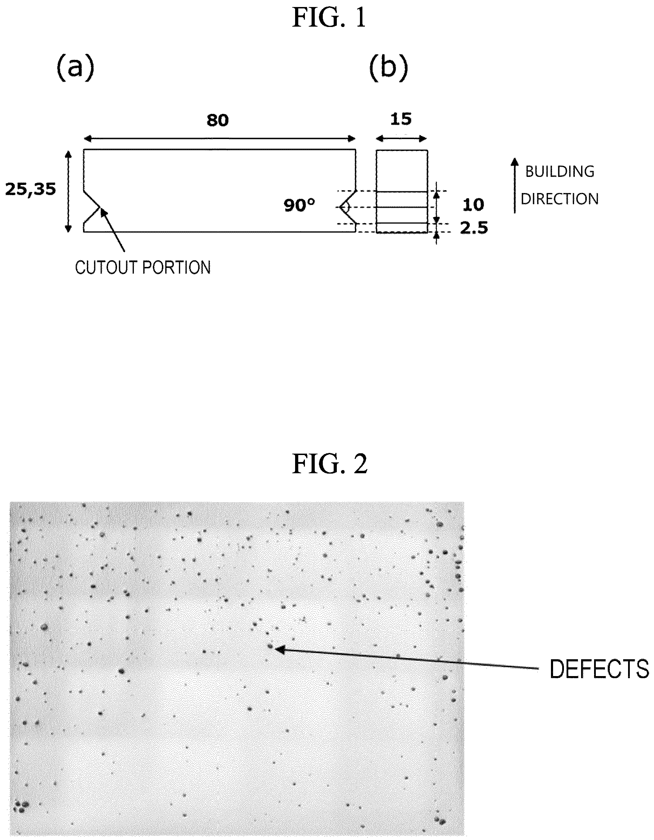

Then, in each of Examples and Comparative Examples, two types of additively-manufactured bodies having substantially prismatic shape were obtained. An appearance of the additively-manufactured body is illustrated in FIG. 1. (a) of FIG. 1 is a schematic side view of the additively-manufactured body obtained in each of Examples and Comparative Examples, and (b) of FIG. 1 is a schematic end view. As illustrated in FIG. 1, the additively-manufactured body obtained in each of Examples and Comparative Examples has a substantially prismatic shape and has a cutout portion at an end portion. In the additively-manufactured body obtained in each of Examples and Comparative Examples, a width of a side surface was 80 mm and a width of an end surface was 15 mm as shown in FIG. 1. Then, two types of additively-manufactured bodies having a height (width in the building direction) of 25 mm and 35 mm were produced.

Further, the cutout portion in the additively-manufactured body obtained in each of Examples and Comparative Examples has a height (width in the building direction) of 10 mm, and is formed from a position of 2.5 mm to a position of 12.5 mm from a lower surface. As illustrated in (a) of FIG. 1, the cutout portion has an isosceles right triangle when viewed from the side surface.

In each of Examples and Comparative Examples, the presence or absence of cracks in the cutout portion in each of the additively-manufactured bodies having a height of 25 mm and 35 mm was checked.

The results are shown in Table 2.

In addition, the additively-manufactured body having a height of 25 mm obtained in each of Examples was cut in a direction parallel to the height direction (end surface as illustrated in (b) of FIG. 1) at arbitrary position, the cut surface was mirror-polished, and then an image of a metal structure of the cut surface was captured by using an optical microscope.

A photograph of the metal structure obtained for the additively-manufactured body obtained in Example 7 is shown in FIG. 2. FIG. 2 is a photograph obtained by continuously synthesizing photographs captured at a magnification of 50 by using an optical microscope.

Thereafter, binarization processing was performed by using an image processing software ImageJ, and the area ratio of internal defects was calculated. The area ratio was analyzed in a cut surface area range of 50 mm$^2$ or more, and the area ratio of internal defects was measured.

The results are shown in Table 2. The area ratio of the internal defects is preferably 1% or less.

A case where no crack was generated in both the cutout portion in the additively-manufactured product having a height of 25 mm and the cutout portion in the additively-manufactured product having a height of 35 mm, and the area ratio of the internal defects was 1% or less was determined as "very good (A)".

A case where no crack was generated in both the cutout portion in the additively-manufactured product having a height of 25 mm and the cutout portion in the additively-manufactured product having a height of 35 mm, but the area ratio of the internal defects exceeded 1% was determined as "good (B)".

A case where cracks were generated in only the cutout portion in the additively-manufactured product having a height of 25 mm and the area ratio of the internal defects was 1% or less was also determined as "good (B)".

Further, a case where cracks were generated in both the cutout portion in the additively-manufactured product having a height of 25 mm and the cutout portion in the additively-manufactured product having a height of 35 mm was determined as "poor (C)".

The results are shown in Table 2.

[Table 1]

| | Composition (mass%) of iron-based alloy powder | | | | | | |
|---|---|---|---|---|---|---|---|
| | C | Si | Mn | P | S | Ni | Cr |
| Example 1 | 0.23 | 0.1 | 0.5 | 0.007 | 0.005 | 0.01 | 5.3 |
| Example 2 | 0.23 | 0.1 | 0.5 | 0.007 | 0.005 | 0.01 | 5.3 |
| Example 3 | 0.23 | 0.1 | 0.5 | 0.007 | 0.005 | 0.01 | 5.3 |
| Example 4 | 0.23 | 0.1 | 0.5 | 0.007 | 0.005 | 0.01 | 5.3 |
| Example 5 | 0.23 | 0.1 | 0.5 | 0.007 | 0.005 | 0.01 | 5.3 |
| Example 6 | 0.23 | 0.1 | 0.5 | 0.007 | 0.005 | 0.01 | 5.3 |
| Example 7 | 0.23 | 0.1 | 0.5 | 0.007 | 0.005 | 0.01 | 5.3 |
| Example 8 | 0.23 | 0.1 | 0.5 | 0.007 | 0.005 | 0.01 | 5.3 |
| Example 9 | 0.23 | 0.1 | 0.5 | 0.007 | 0.005 | 0.01 | 5.3 |
| Example 10 | 0.23 | 0.1 | 0.5 | 0.007 | 0.005 | 0.01 | 5.3 |
| Example 11 | 0.23 | 0.1 | 0.5 | 0.007 | 0.005 | 0.01 | 5.3 |
| Example 12 | 0.13 | 0.2 | 0.4 | 0.006 | 0.003 | 0.02 | 4.9 |
| Example 13 | 0.36 | 0.08 | 0.4 | 0.004 | 0.003 | 0.02 | 5.1 |
| Example 14 | 0.23 | 0.1 | 0.5 | 0.003 | 0.004 | 1.5 | 5.1 |
| Example 15 | 0.22 | 0.1 | 0.5 | 0.007 | 0.005 | 0.02 | 5.3 |
| Example 16 | 0.22 | 0.2 | 0.5 | 0.007 | 0.005 | 0.02 | 6.3 |
| Example 33 | 0.23 | 0.1 | 0.5 | 0.007 | 0.005 | 0.01 | 5.3 |
| Example 35 | 0.24 | 0.1 | 0.4 | 0.007 | 0.004 | 0.02 | 0.2 |
| Example 17 | 0.23 | 0.1 | 0.5 | 0.007 | 0.005 | 0.01 | 5.3 |
| Example 18 | 0.23 | 0.1 | 0.5 | 0.007 | 0.005 | 0.01 | 5.3 |
| Example 19 | 0.23 | 0.1 | 0.5 | 0.007 | 0.005 | 0.01 | 5.3 |
| Example 20 | 0.23 | 0.1 | 0.5 | 0.007 | 0.005 | 0.01 | 5.3 |
| Example 21 | 0.23 | 0.1 | 0.5 | 0.007 | 0.005 | 0.01 | 5.3 |
| Example 22 | 0.23 | 0.1 | 0.5 | 0.007 | 0.005 | 0.01 | 5.3 |
| Example 23 | 0.23 | 0.1 | 0.5 | 0.007 | 0.005 | 0.01 | 5.3 |
| Example 24 | 0.23 | 0.1 | 0.5 | 0.007 | 0.005 | 0.01 | 5.3 |
| Example 25 | 0.23 | 0.1 | 0.5 | 0.007 | 0.005 | 0.01 | 5.3 |

(continued)

| | Composition (mass%) of iron-based alloy powder | | | | | | |
|---|---|---|---|---|---|---|---|
| | C | Si | Mn | P | S | Ni | Cr |
| Example 26 | 0.23 | 0.1 | 0.5 | 0.007 | 0.005 | 0.01 | 5.3 |
| Example 27 | 0.23 | 0.1 | 0.5 | 0.007 | 0.005 | 0.01 | 5.3 |
| Example 28 | 0.13 | 0.2 | 0.4 | 0.006 | 0.003 | 0.02 | 4.9 |
| Example 29 | 0.36 | 0.08 | 0.4 | 0.004 | 0.003 | 0.02 | 5.1 |
| Example 30 | 0.23 | 0.1 | 0.5 | 0.003 | 0.004 | 1.5 | 5.1 |
| Example 31 | 0.22 | 0.1 | 0.5 | 0.007 | 0.005 | 0.02 | 5.3 |
| Example 32 | 0.22 | 0.2 | 0.5 | 0.007 | 0.005 | 0.02 | 6.3 |
| Example 34 | 0.23 | 0.1 | 0.5 | 0.007 | 0.005 | 0.01 | 5.3 |
| Example 36 | 0.24 | 0.1 | 0.4 | 0.007 | 0.004 | 0.02 | 0.2 |
| Comparative Example 1 | 0.22 | 0.1 | 0.5 | 0.007 | 0.005 | 0.01 | 5.3 |
| Comparative Example 2 | 0.20 | *0.55* | 0.2 | 0.010 | 0.007 | 0.01 | 7.1 |
| Comparative Example 3 | 0.43 | 0.10 | 0.3 | 0.008 | 0.004 | 0.01 | 0.2 |

[Table 1 (Continued)]

| | Composition (mass%) of iron-based alloy powder | | | | | | Ms point (°C) |
|---|---|---|---|---|---|---|---|
| | Mo | V | Cu | N | O | Fe | |
| Example 1 | 1.2 | 0.40 | 0.01 | 0.03 | 0.03 | > 90 | 321 |
| Example 2 | 1.2 | 0.40 | 0.01 | 0.03 | 0.03 | > 90 | 321 |
| Example 3 | 1.2 | 0.40 | 0.01 | 0.03 | 0.03 | > 90 | 321 |
| Example 4 | 1.2 | 0.40 | 0.01 | 0.03 | 0.03 | > 90 | 321 |
| Example 5 | 1.2 | 0.40 | 0.01 | 0.03 | 0.03 | > 90 | 321 |
| Example 6 | 1.2 | 0.40 | 0.01 | 0.03 | 0.03 | > 90 | 321 |
| Example 7 | 1.2 | 0.40 | 0.01 | 0.03 | 0.03 | > 90 | 321 |
| Example 8 | 1.2 | 0.40 | 0.01 | 0.03 | 0.03 | > 90 | 321 |
| Example 9 | 1.2 | 0.40 | 0.01 | 0.03 | 0.03 | > 90 | 321 |
| Example 10 | 1.2 | 0.40 | 0.01 | 0.03 | 0.03 | > 90 | 321 |
| Example 11 | 1.2 | 0.40 | 0.01 | 0.03 | 0.03 | > 90 | 321 |
| Example 12 | 1.1 | 0.43 | 0.03 | 0.02 | 0.03 | > 90 | 368 |
| Example 13 | 1.1 | 0.39 | 0.01 | 0.02 | 0.03 | > 90 | 283 |
| Example 14 | 1.1 | 0.41 | 0.01 | 0.02 | 0.02 | > 90 | 300 |
| Example 15 | 1.4 | 0.50 | 0.01 | 0.03 | 0.03 | > 90 | 320 |
| Example 16 | 1.2 | 0.40 | 0.01 | 0.03 | 0.03 | > 90 | 305 |
| Example 33 | 3.6 | 0.40 | 0.01 | 0.03 | 0.03 | > 90 | 309 |
| Example 35 | 1.1 | 0.30 | 0.02 | 0.03 | 0.02 | > 90 | 427 |
| Example 17 | 1.2 | 0.40 | 0.01 | 0.03 | 0.03 | > 90 | 321 |
| Example 18 | 1.2 | 0.40 | 0.01 | 0.03 | 0.03 | > 90 | 321 |
| Example 19 | 1.2 | 0.40 | 0.01 | 0.03 | 0.03 | > 90 | 321 |
| Example 20 | 1.2 | 0.40 | 0.01 | 0.03 | 0.03 | > 90 | 321 |

(continued)

| | Composition (mass%) of iron-based alloy powder | | | | | | Ms point (°C) |
|---|---|---|---|---|---|---|---|
| | Mo | V | Cu | N | O | Fe | |
| Example 21 | 1.2 | 0.40 | 0.01 | 0.03 | 0.03 | > 90 | 321 |
| Example 22 | 1.2 | 0.40 | 0.01 | 0.03 | 0.03 | > 90 | 321 |
| Example 23 | 1.2 | 0.40 | 0.01 | 0.03 | 0.03 | > 90 | 321 |
| Example 24 | 1.2 | 0.40 | 0.01 | 0.03 | 0.03 | > 90 | 321 |
| Example 25 | 1.2 | 0.40 | 0.01 | 0.03 | 0.03 | > 90 | 321 |
| Example 26 | 1.2 | 0.40 | 0.01 | 0.03 | 0.03 | > 90 | 321 |
| Example 27 | 1.2 | 0.40 | 0.01 | 0.03 | 0.03 | > 90 | 321 |
| Example 28 | 1.1 | 0.43 | 0.03 | 0.02 | 0.03 | > 90 | 368 |
| Example 29 | 1.1 | 0.39 | 0.01 | 0.02 | 0.03 | > 90 | 283 |
| Example 30 | 1.1 | 0.41 | 0.01 | 0.02 | 0.02 | > 90 | 300 |
| Example 31 | 1.4 | 0.50 | 0.01 | 0.03 | 0.03 | > 90 | 320 |
| Example 32 | 1.2 | 0.40 | 0.01 | 0.03 | 0.03 | > 90 | 305 |
| Example 34 | 3.9 | 0.40 | 0.01 | 0.03 | 0.03 | > 90 | 308 |
| Example 36 | 1.1 | 0.30 | 0.02 | 0.03 | 0.02 | > 90 | 427 |
| Comparative Example 1 | 1.2 | 0.40 | 0.01 | 0.03 | 0.03 | > 90 | 325 |
| Comparative Example 2 | 1.0 | 0.71 | 0.02 | 0.03 | 0.02 | > 90 | 298 |
| Comparative Example 3 | 0.1 | 0.01 | 0.02 | 0.03 | 0.02 | > 90 | 378 |

[Table 2]

| | Manufacturing condition | | | | | | |
|---|---|---|---|---|---|---|---|
| | Laser power P (W) | Scanning speed v (mm/s) | Hatching distance w (mm) | Layer thickness t (mm) | Laser spot diameter σ (mm) | Energy density per area EA ($J/mm^2$) | Energy density per volume EV ($J/mm^3$) |
| Ex. 1 | 300 | 500 | 0.13 | 0.05 | 0.18 | 3.3 | 92.3 |
| Ex. 2 | 300 | 400 | 0.13 | 0.05 | 0.18 | 4.2 | 115.4 |
| Ex. 3 | 400 | 500 | 0.13 | 0.05 | 0.18 | 4.4 | 123.1 |
| Ex. 4 | 400 | 500 | 0.13 | 0.05 | 0.18 | 4.4 | 123.1 |
| Ex. 5 | 400 | 450 | 0.13 | 0.05 | 0.18 | 4.9 | 136.8 |
| Ex. 6 | 390 | 400 | 0.13 | 0.05 | 0.18 | 5.4 | 150.0 |
| Ex. 7 | 400 | 300 | 0.13 | 0.05 | 0.18 | 7.4 | 205.1 |
| Ex. 8 | 400 | 400 | 0.3 | 0.05 | 0.18 | 5.6 | 66.7 |
| Ex. 9 | 300 | 600 | 0.08 | 0.05 | 0.11 | 4.5 | 125.0 |
| Ex. 10 | 300 | 600 | 0.13 | 0.05 | 0.09 | 5.6 | 76.9 |
| Ex. 11 | 400 | 450 | 0.13 | 0.05 | 0.27 | 3.3 | 136.8 |
| Ex. 12 | 300 | 500 | 0.13 | 0.05 | 0.18 | 3.3 | 92.3 |
| Ex. 13 | 400 | 450 | 0.13 | 0.05 | 0.18 | 4.9 | 136.8 |
| Ex. 14 | 400 | 500 | 0.13 | 0.05 | 0.18 | 4.4 | 123.1 |
| Ex. 15 | 400 | 500 | 0.13 | 0.05 | 0.18 | 4.4 | 123.1 |

(continued)

| | Manufacturing condition | | | | | | |
|---|---|---|---|---|---|---|---|
| | Laser power P (W) | Scanning speed v (mm/s) | Hatching distance w (mm) | Layer thickness t (mm) | Laser spot diameter σ (mm) | Energy density per area EA (J/mm$^2$) | Energy density per volume EV (J/mm$^3$) |
| Ex. 16 | 400 | 500 | 0.13 | 0.05 | 0.18 | 4.4 | 123.1 |
| Ex. 33 | 300 | 500 | 0.13 | 0.05 | 0.18 | 3.3 | 92.3 |
| Ex. 35 | 300 | 400 | 0.13 | 0.05 | 0.18 | 4.2 | 115.4 |
| Ex. 17 | 300 | 500 | 0.13 | 0.05 | 0.18 | 3.3 | 92.3 |
| Ex. 18 | 300 | 400 | 0.13 | 0.05 | 0.18 | 4.2 | 115.4 |
| Ex. 19 | 400 | 500 | 0.13 | 0.05 | 0.18 | 4.4 | 123.1 |
| Ex. 20 | 400 | 500 | 0.13 | 0.05 | 0.18 | 4.4 | 123.1 |
| Ex. 21 | 400 | 450 | 0.13 | 0.05 | 0.18 | 4.9 | 136.8 |
| Ex. 22 | 390 | 400 | 0.13 | 0.05 | 0.18 | 5.4 | 150.0 |
| Ex. 23 | 400 | 300 | 0.13 | 0.05 | 0.18 | 7.4 | 205.1 |
| Ex. 24 | 400 | 400 | 0.3 | 0.05 | 0.18 | 5.6 | 66.7 |
| Ex. 25 | 300 | 600 | 0.08 | 0.05 | 0.11 | 4.5 | 125.0 |
| Ex. 26 | 300 | 600 | 0.13 | 0.05 | 0.09 | 5.6 | 76.9 |
| Ex. 27 | 400 | 450 | 0.13 | 0.05 | 0.27 | 3.3 | 136.8 |
| Ex. 28 | 300 | 500 | 0.13 | 0.05 | 0.18 | 3.3 | 92.3 |
| Ex. 29 | 400 | 450 | 0.13 | 0.05 | 0.18 | 4.9 | 136.8 |
| Ex. 30 | 400 | 500 | 0.13 | 0.05 | 0.18 | 4.4 | 123.1 |
| Ex. 31 | 400 | 500 | 0.13 | 0.05 | 0.18 | 4.4 | 123.1 |
| Ex. 32 | 400 | 500 | 0.13 | 0.05 | 0.18 | 4.4 | 123.1 |
| Ex. 34 | 300 | 500 | 0.13 | 0.05 | 0.18 | 3.3 | 92.3 |
| Ex. 36 | 300 | 400 | 0.13 | 0.05 | 0.18 | 4.2 | 115.4 |
| Comp. Ex. 1 | 300 | 600 | 0.13 | 0.05 | 0.18 | 2.8 | 76.9 |
| Comp. Ex. 2 | 350 | 500 | 0.13 | 0.05 | 0.18 | 3.9 | 107.7 |
| Comp. Ex. 3 | 400 | 500 | 0.13 | 0.05 | 0.18 | 4.4 | 123.1 |

[Table 2 (Continued)]

| | Manufacturing condition | | Cracks in cutout portion (height 25 mm) | Cracks in cutout portion (height 35 mm) | Area ratio (%) of internal defects | Determination |
|---|---|---|---|---|---|---|
| | Preheating temperature (°C) | Atmosphere gas | | | | |
| Ex. 1 | 200 | $N_2$ | Absence | Presence | 0.02 | B |
| Ex. 2 | 120 | $N_2$ | Absence | Presence | 0.02 | B |
| Ex. 3 | 120 | $N_2$ | Absence | Presence | 0.03 | B |
| Ex. 4 | 200 | $N_2$ | Absence | Absence | 0.03 | A |
| Ex. 5 | (No preheat) | $N_2$ | Absence | Presence | 0.05 | B |
| Ex. 6 | 200 | $N_2$ | Absence | Absence | 0.5 | A |

(continued)

| | | Manufacturing condition | | Cracks in cutout portion (height 25 mm) | Cracks in cutout portion (height 35 mm) | Area ratio (%) of internal defects | Determination |
|---|---|---|---|---|---|---|---|
| | | Preheating temperature (°C) | Atmosphere gas | | | | |
| Ex. 7 | | 200 | $N_2$ | Absence | Absence | 1.5 | B |
| Ex. 8 | | 200 | $N_2$ | Absence | Absence | 1.2 | B |
| Ex. 9 | | 200 | $N_2$ | Absence | Absence | 0.05 | A |
| Ex. 10 | | 200 | $N_2$ | Absence | Presence | 0.02 | B |
| Ex. 11 | | 200 | $N_2$ | Absence | Presence | 0.02 | B |
| Ex. 12 | | (No preheat) | $N_2$ | Absence | Absence | 0.02 | A |
| Ex. 13 | | 200 | $N_2$ | Absence | Presence | 0.05 | B |
| Ex. 14 | | 120 | $N_2$ | Absence | Absence | 0.03 | A |
| Ex. 15 | | 120 | $N_2$ | Absence | Presence | 0.03 | B |
| Ex. 16 | | 200 | $N_2$ | Absence | Absence | 0.11 | A |
| Ex. 33 | | 200 | $N_2$ | Absence | Presence | 0.02 | B |
| Ex. 35 | | 200 | $N_2$ | Absence | Absence | 0.05 | A |
| Ex. 17 | | 200 | Ar | Absence | Absence | 0.02 | A |
| Ex. 18 | | 120 | Ar | Absence | Absence | 0.03 | A |
| Ex. 19 | | 120 | Ar | Absence | Absence | 0.04 | A |
| Ex. 20 | | 200 | Ar | Absence | Absence | 0.04 | A |
| Ex. 21 | | (No preheat) | Ar | Absence | Presence | 0.1 | B |
| Ex. 22 | | 200 | Ar | Absence | Absence | 0.9 | A |
| Ex. 23 | | 200 | Ar | Absence | Absence | 1.7 | B |
| Ex. 24 | | 200 | Ar | Absence | Absence | 1.1 | B |
| Ex. 25 | | 200 | Ar | Absence | Absence | 0.05 | A |
| Ex. 26 | | 200 | Ar | Absence | Absence | 0.03 | A |
| Ex. 27 | | 200 | Ar | Absence | Absence | 0.03 | A |
| Ex. 28 | | (No preheat) | Ar | Absence | Absence | 0.03 | A |
| Ex. 29 | | 200 | Ar | Absence | Absence | 0.09 | A |
| Ex. 30 | | 120 | Ar | Absence | Absence | 0.05 | A |
| Ex. 31 | | 120 | Ar | Absence | Absence | 0.05 | A |
| Ex. 32 | | 200 | Ar | Absence | Absence | 0.13 | A |
| Ex. 34 | | 200 | Ar | Absence | Absence | 0.02 | A |
| Ex. 36 | | 200 | Ar | Absence | Absence | 0.08 | A |
| Comp. Ex. 1 | | 200 | $N_2$ | Presence | Presence | - | C |
| Comp. Ex. 2 | | 120 | Ar | Presence | Presence | - | C |
| Comp. Ex. 3 | | 120 | Ar | Presence | Presence | - | C |

As shown in Table 2, in all of Examples 1 to 36 within the scope of the present invention, no crack was generated in the cutout portion in the additively-manufactured product having a height of 25 mm.

On the other hand, cracks were generated in Comparative Example 1 in both the cutout portion in the additively-manufactured product having a height of 25 mm and the cutout portion in the additively-manufactured product having a height of 35 mm. This is considered to be because the energy density per area EA was small and the residual stress was excessively large.

In Comparative Example 2, cracks were generated even though the energy density per area EA was 3 J/mm$^2$ or more. It is presumed that this is because the V and Cr contents were high and the hardness of the manufactured product became excessive due to precipitation of carbides and because the Si content was too large and the toughness deteriorated.

In Comparative Example 3, cracks were generated even though the energy density per area EA was 3 J/mm$^2$ or more. It is presumed that this is because the C content was high and the hardness of the martensite structure of the manufactured product was excessive.

While the present invention has been described with reference to certain exemplary embodiments thereof, the scope of the present invention is not limited to the exemplary embodiments described above, and it will be appreciated by those skilled in the art that various changes and modifications may be made therein without departing from the scope of the present invention as defined by the appended claims.

The present application is based on Japanese Patent Application No. 2024-069645 filed on April 23, 2024 and Japanese Patent Application No. 2025-013892 filed on January 30, 2025, the contents thereof being hereby incorporated by reference.

**Claims**

1. A method for producing a high-strength and high-thermal-conductivity additively-manufactured body of an iron-based alloy with a laser-powder bed fusion, the method comprising:

   using an iron-based alloy powder having a Ms point of higher than 220°C, a C content of 0.40 mass% or less, a Cr content of 7 mass% or less, and a Fe content of 90 mass% or more; and
   performing manufacturing at a laser power P (W), a scanning speed v (mm/s), and a laser spot diameter σ (mm) at which an energy density per area, EA, is 3 J/mm$^2$ or more when the energy density per area, EA, is defined as EA = P/(v·σ).

2. The method for producing a high-strength and high-thermal-conductivity additively-manufactured body of an iron-based alloy according to claim 1, wherein the iron-based alloy powder further contains at least one element selected from the group consisting of Si, Mn, Ni, and V in the following respective content, or further satisfies the following Expression (1) where "Mo" and "W" in Expression (1) mean a Mo content and a W content, respectively:

   a Si content of 0.5 mass% or less,
   a Mn content of 1.0 mass% or less,
   a Ni content of 3 mass% or less,
   a V content of 0.7 mass% or less, and

$$\text{Mo} + 0.5\text{W} \leq 4.0 \text{ mass\%} \qquad \text{Expression (1).}$$

3. The method for producing a high-strength and high-thermal-conductivity additively-manufactured body of an iron-based alloy according to claim 1 or 2, wherein the manufacturing is performed at a laser power P (W), a scanning speed v (mm/s), and a laser spot diameter σ (mm) at which the energy density per area EA is 3 J/mm$^2$ to 6 J/mm$^2$.

4. The method for producing a high-strength and high-thermal-conductivity additively-manufactured body of an iron-based alloy according to any one of claims 1 to 3, wherein the manufacturing is performed at a laser power P (W), a scanning speed v (mm/s), a hatching distance w (mm), and a layer thickness t (mm) at which an energy density per volume EV is 70 J/mm$^3$ or more when the energy density per volume EV is defined as EV = P/(v·w·t).

5. The method for producing a high-strength and high-thermal conductivity additively-manufactured body of an iron-based alloy according to claim 4, wherein the manufacturing is performed at a laser power P (W), a scanning speed v (mm/s), a hatching distance w (mm), and a layer thickness t (mm) at which the energy density per volume EV is 90 J/mm$^3$ to 150 J/mm$^3$.

6. The method for producing a high-strength and high-thermal conductivity additively-manufactured body of an iron-based alloy according to any one of claims 1 to 5, wherein the manufacturing is performed in an Ar atmosphere.

7.  The method for producing a high-strength and high-thermal-conductivity additively-manufactured body of an iron-based alloy according to any one of claims 1 to 6, wherein the iron-based alloy powder further contains at least one element selected from the group consisting of Cu, Al and Co in the following respective content:

    a Cu content of 1 mass% or less,
    an Al content of 1 mass% or less, and
    a Co content of 3 mass% or less.

8.  The method for producing a high-strength and high-thermal-conductivity additively-manufactured body of an iron-based alloy according to any one of claims 1 to 7, wherein the iron-based alloy powder further contains at least one element selected from the group consisting of Nb, Ta, Ti, and Hf in the following respective content:

    a Nb content of 1 mass% or less,
    a Ta content of 1 mass% or less,
    a Ti content of 1 mass% or less, and
    a Hf content of 1 mass% or less.

9.  The method for producing a high-strength and high-thermal-conductivity additively-manufactured body of an iron-based alloy according to any one of claims 1 to 8, wherein a base plate on which the manufacturing is to be performed is preheated to 120°C to 200°C before performing the manufacturing.

10. The method for producing a high-strength and high-thermal-conductivity additively-manufactured body of an iron-based alloy according to claim 2 or any claim dependent therefrom, wherein the Si content is 0.02 mass% or more.

11. The method for producing a high-strength and high-thermal-conductivity additively-manufactured body of an iron-based alloy according to claim 2 or any claim dependent therefrom, wherein the Mn content is 0.1 mass% or more.

12. The method for producing a high-strength and high-thermal-conductivity additively-manufactured body of an iron-based alloy according to claim 2 or any claim dependent therefrom, wherein the Ni content is 0.001 mass% or more.

13. The method for producing a high-strength and high-thermal-conductivity additively-manufactured body of an iron-based alloy according to claim 2 or any claim dependent therefrom, wherein the V content is 0.1 mass% or more.

14. The method for producing a high-strength and high-thermal-conductivity additively-manufactured body of an iron-based alloy according to claim 2 or any claim dependent therefrom, wherein the Mo content is 0.5 mass% or more.

15. The method for producing a high-strength and high-thermal-conductivity additively-manufactured body of an iron-based alloy according to claim 2 or any claim dependent therefrom, wherein the W content is 0.5 mass% or more.

## FIG. 1

(a)    (b)

80    15

25,35    90°    BUILDING DIRECTION

10
2.5

CUTOUT PORTION

## FIG. 2

DEFECTS

Europäisches
Patentamt

European
Patent Office

Office européen
des brevets

# EUROPEAN SEARCH REPORT

**Application Number**

EP 25 17 1883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 500 393 A (UNIV SOUTHWEST JIAOTONG) 22 March 2019 (2019-03-22) * examples 1,3 * * claims 1,6 * ----- | 1-12,14 | INV. B22F10/28 B33Y10/00 B33Y70/00 C22C33/02 |
| X | JP 7 306601 B1 (JFE STEEL CORP) 11 July 2023 (2023-07-11) * abstract * -& EP 4 471 170 A1 (JFE STEEL CORP [JP]) 4 December 2024 (2024-12-04) * paragraph [0058] * * paragraph [0065] * * paragraph [0070] * * tables 1,2 * ----- | 1,2,4, 7-11 | C22C38/00 C22C38/02 C22C38/04 C22C38/08 C22C38/12 C22C38/18 |
| X | US 2021/040591 A1 (FUKUZAWA NORIHIDE [JP] ET AL) 11 February 2021 (2021-02-11) * paragraph [0052] * * paragraph [0069] - paragraph [0070] * * tables 1,2 * ----- | 1-3,7-14 | |
| X | WEI MINGWEI ET AL: "Selective laser melting of 24CrNiMo steel for brake disc: Fabrication efficiency, microstructure evolution, and properties", OPTICS AND LASER TECHNOLOGY, ELSEVIER SCIENCE PUBLISHERS BV., AMSTERDAM, NL, vol. 107, 26 May 2018 (2018-05-26), pages 99-109, XP085418159, ISSN: 0030-3992, DOI: 10.1016/J.OPTLASTEC.2018.05.033 * sections 2.1, 4.1 and 4.2 * * table 1 * ----- -/-- | 1,2, 4-12,14 | TECHNICAL FIELDS SEARCHED (IPC) B22F C22C B33Y |

The present search report has been drawn up for all claims

| Place of search | Date of completion of the search | Examiner |
|---|---|---|
| The Hague | 18 September 2025 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 25 17 1883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/184707 A1 (AUMAYR CHRISTIN [AT] ET AL) 16 June 2022 (2022-06-16)<br>* paragraph [0079] *<br>* paragraph [0081] *<br>* paragraph [0085] *<br>* paragraph [0102] - paragraph [0103] *<br>* paragraph [0106] *<br>* figures 1,6,9 *<br>----- | 1-3,6-13 | |
| X | DE 10 2019 135830 A1 (VOESTALPINE BOEHLER EDELSTAHL GMBH & CO KG [AT]) 1 July 2021 (2021-07-01)<br>* claim 1 *<br>* paragraph [0009] *<br>* paragraph [0011] *<br>* paragraph [0024] *<br>* paragraph [0029] *<br>* paragraph [0031] *<br>* paragraph [0039] *<br>* paragraph [0043] *<br>* paragraph [0060] *<br>* figures 7,15 *<br>----- | 1,3,7-9 | |
| X | US 2024/043974 A1 (HAGIYA TORU [JP] ET AL) 8 February 2024 (2024-02-08)<br>* paragraph [0106] *<br>* paragraph [0108] *<br>* table 1 *<br>-----<br>-/-- | 1-5,7,8, 10-15 | **TECHNICAL FIELDS SEARCHED (IPC)** |

The present search report has been drawn up for all claims

| Place of search | Date of completion of the search | Examiner |
|---|---|---|
| The Hague | 18 September 2025 | Järvi, Tommi |

EPO FORM 1503 03.82 (P04C01)

**EUROPEAN SEARCH REPORT**

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | KING W E ET AL: "Laser powder bed fusion additive manufacturing of metals; physics, computational, and materials challenges", APPLIED PHYSICS REVIEWS, AMERICAN INSTITUTE OF PHYSICS, 2 HUNTINGTON QUADRANGLE, MELVILLE, NY 11747, vol. 2, no. 4, 29 December 2015 (2015-12-29), XP012204143, DOI: 10.1063/1.4937809 [retrieved on 1901-01-01] * page 13 * ----- | | |
| T | Anonymous: "Laser Beam Measurement Vocabulary", , 1 January 2016 (2016-01-01), pages 1-5, XP055798494, Retrieved from the Internet: URL:https://www.ophiropt.com/user_files/laser/beam_profilers/Laser_Vocabulary.pdf [retrieved on 2021-04-23] * page 2 * ----- | | TECHNICAL FIELDS SEARCHED (IPC) |

The present search report has been drawn up for all claims

| Place of search | Date of completion of the search | Examiner |
|---|---|---|
| The Hague | 18 September 2025 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 25 17 1883

This annex lists the patent family members relating to the patent documents cited in  the above-mentioned European search report.
The members are as contained in the European Patent Office EDP file on
The European Patent Office is in no way liable for these particulars which are merely given for the purpose of information.

18-09-2025

| Patent document cited in search report | | Publication date | Patent family member(s) | | Publication date |
|---|---|---|---|---|---|
| CN 109500393 | A | 22-03-2019 | NONE | | |
| JP 7306601 | B1 | 11-07-2023 | CN | 118679273 A | 20-09-2024 |
| | | | EP | 4471170 A1 | 04-12-2024 |
| | | | JP | 7306601 B1 | 11-07-2023 |
| | | | JP | WO2023157419 A1 | 24-08-2023 |
| | | | KR | 20240116494 A | 29-07-2024 |
| | | | US | 2025108434 A1 | 03-04-2025 |
| EP 4471170 | A1 | 04-12-2024 | CN | 118679273 A | 20-09-2024 |
| | | | EP | 4471170 A1 | 04-12-2024 |
| | | | JP | 7306601 B1 | 11-07-2023 |
| | | | JP | WO2023157419 A1 | 24-08-2023 |
| | | | KR | 20240116494 A | 29-07-2024 |
| | | | US | 2025108434 A1 | 03-04-2025 |
| US 2021040591 | A1 | 11-02-2021 | CN | 111954725 A | 17-11-2020 |
| | | | EP | 3795707 A1 | 24-03-2021 |
| | | | JP | 6974607 B2 | 01-12-2021 |
| | | | JP | WO2019220917 A1 | 25-02-2021 |
| | | | SG | 11202006979T A | 28-08-2020 |
| | | | US | 2021040591 A1 | 11-02-2021 |
| | | | WO | 2019220917 A1 | 21-11-2019 |
| US 2022184707 | A1 | 16-06-2022 | CA | 3138382 A1 | 05-11-2020 |
| | | | DE | 102019111236 A1 | 05-11-2020 |
| | | | EP | 3963113 A1 | 09-03-2022 |
| | | | US | 2022184707 A1 | 16-06-2022 |
| | | | WO | 2020221812 A1 | 05-11-2020 |
| DE 102019135830 | A1 | 01-07-2021 | DE | 102019135830 A1 | 01-07-2021 |
| | | | EP | 4081362 A1 | 02-11-2022 |
| | | | WO | 2021130301 A1 | 01-07-2021 |
| US 2024043974 | A1 | 08-02-2024 | EP | 4261302 A1 | 18-10-2023 |
| | | | JP | 7277426 B2 | 19-05-2023 |
| | | | JP | 2022092524 A | 22-06-2022 |
| | | | TW | 202231890 A | 16-08-2022 |
| | | | US | 2024043974 A1 | 08-02-2024 |
| | | | WO | 2022124359 A1 | 16-06-2022 |

EPO FORM P0459

For more details about this annex : see Official Journal of the European Patent Office, No. 12/82

**EP 4 644 020 A1**

**Patent documents cited in the description**

- JP 7096405 B
- JP 2024069645 A
- JP 2025013892 A